# EUROPÄISCHE PATENTANMELDUNG

(11) **EP 0 595 113 A1**
(43) Veröffentlichungstag der Anmeldung: **04.05.1994**
(21) Anmeldenummer: 93116546.8
(22) Anmeldetag: 13.10.1993
(51) Int. Cl.: B29B 7/76

(54) **Vorrichtung zum Herstellen eines Schaumstoff bildenden Reaktionsgemisches**

(30) Priorität: 26.10.1992 DE 4235970
(71) Anmelder: BAYER AG, 51368 Leverkusen (DE)
(72) Erfinder: Lamberts, Wilhelm, Dr., D-51373 Leverkusen (DE); Thompson-Colon, James, Dr., D-42699 Solingen (DE); Ebeling, Wilfried, D.I., D-51069 Köln (DE); Schulte, Klaus, D.I., D-51375 Leverkusen (DE)

(57) **Zusammenfassung**

Bei Vorrichtungen zur Herstellung eines Schaumstoff bildenden Reaktionsgemisches aus mindestens zwei Reaktionskomponenten und Treibmittel läßt sich der Treibmittel-Gehalt in einer damit vermischten Reaktionskomponente feststellen, indem ein Zwischenbehälter (13) für dieses Gemisch vorgesehen ist, welcher eine Kreislaufleitung (15) aufweist, in welcher eine Umwälzpumpe (16) sowie ein Temperatur kompensierendes Viskosimeter (17) angeordnet sind. Gegebenenfalls läßt sich der Treibmittel-Gehalt über einen Rechner (20) und Impulsleitungen (21, 22) durch Einwirken auf die Antriebe der Dosierpumpen (7, 9) für die betreffende Reaktionskomponente und das Treibmittel automatisch auf den Sollwert nachregulieren.

## Beschreibung

Die Erfindung betrifft eine Vorrichtung zum Herstellen eines Schaumstoff bildenden Reaktionsgemisches aus mindestens zwei Reaktionskomponenten und einem Treibmittel, bestehend aus Vorratsbehältern für die Reaktionskomponenten und das Treibmittel, von denen Zuleitungen über Dosierpumpen zu einem Mischkopf führen, wobei die Zuleitungen für eine der Reaktionskomponenten und für das Treibmittel sich hinter den zugehörigen Dosierpumpen vereinigen und wobei in dieser gemeinsamen Zuleitung ein Vormischer und ein Zwischenbehälter angeordnet sind.

Eine solche Vorrichtung wird von der MASCHINENFABRIK HENNECKE GMBH, Birlinghovener Straße 30, D-5205 Sankt Augustin 1, vertrieben und ist in deren Firmenschrift *"DELTAMAT"*, Nr. 48, 3T 08/92 Ha, auf Seite 3 hinsichtlich der Treibmittel-Zuführung dargestellt.

Um die schädlichen FCKW-haltigen Treibmittel zu ersetzen, verwendet man immer mehr niedrigsiedende Treibmittel, wie z. B. R22 (vgl. "Kunststoffe" 80, 1990, Heft 8, Seite 909). Die Treibmittel werden in Druckbehältern verschiedener Größe angeliefert, welche in der Regel direkt an das Leitungssystem anschließbar sind. Die Vermischung mit den Reaktionskomponenten, meist mit dem Polyol, erfolgt unter einem Druck von ca. 20 bar, und das Gemisch wird in einen Zwischenbehälter, in der Praxis "Arbeitsbehälter" genannt, eingebracht und unter Druck gehalten. Mit Kontrolleinrichtungen, beispielsweise Massestrom-Meßgeräten, wird die exakte Einhaltung des Mischungsverhältnisses überwacht. Die derart hergestellte Mischung besitzt naturgemäß einen niedrigeren Dampfdruck als das Treibmittel allein; sie bleibt aber aufgrund des vorherrschenden Druckes im Zwischenbehälter stets im flüssigen Zustand.

Treten im Zwischenbehälter Druckunterschiede auf oder entweichen durch Leckagen an der Rührerwelle Luft und/oder Treibmittelgase, kann es zu Verlusten an Treibmittel aus der hergestellten Mischung führen. Diese Verluste verursachen zwangsläufig eine veränderte, schlechtere Schaumstoff-Qualität. Wegen der Flüchtigkeit der Treibmittel ist es nicht möglich, eine Bestimmung des Treibmittel-Gehaltes unter atmosphärischen Bedingungen durchzuführen.

Es besteht die Aufgabe, die eingangs genannte Vorrichtung so zu gestalten, daß kontinuierlich und unter den vorherrschenden Druckbedingungen im Zwischenbehälter der aktuelle Treibmittel-Gehalt der Mischung ermittelbar ist.

Diese Aufgabe wird dadurch gelöst, daß diesem Zwischenbehälter eine Kreislaufleitung zugeordnet ist und daß in dieser Kreislaufleitung eine konstant arbeitende Umwälzpumpe und ein mit einer Temperatur-Kompensation versehenes Viskosimeter angeordnet sind.

Derartige Viskosimeter sind handelsüblich und werden beispielsweise von der Firma BTG ANLAGENTECHNIK GMBH, Rensingstraße 8, D-4630 Bochum 1, vertrieben. Sie sind aus dem Datenblatt D 218.20-21/lg *"MBT-150/MBT-155 - Schwenkblatt-Viskositätsmeßwertgeber mit elektrischem Ausgangssignal"* dieser Firma ersichtlich. Auch die Firma TECHMARK GMBH, Landsberger Straße 191, D-8000 München 21, vertreibt Viskosimeter; sie sind in der Firmenschrift TM-CAS-300 - *"Die neue Generation der Prozess-Viskositäts-Messgeräte mit Magnet-Technologie"* beschrieben. Derartige Viskosimeter arbeiten mit einem in der Viskoseflüssigkeit hin- und herbewegten Pendel, wobei als Maß für die Zähigkeit die Zeit für einen Ausschlag gemessen wird.

Aus DE 34 16 442 A1 (entsprechend US-PS 4.526.907) ist es an sich bekannt, einem Vortatsbehälter eine Kreislaufleitung zuzuordnen und in dieser eine konstant arbeitende Umwälzpumpe und ein Meßgerät zum Bestimmen des Treibmittelgehaltes der Mischung vorzusehen. Das nicht näher beschriebene Meßgerät besitzt jedoch keine Temperatur-Kompensation.

Völlig überraschend wurde bei Versuchen gefunden, daß bereits ein Gewichtsteil Treibmittel im Polyol einen zur Messung ausreichend großen Viskositätsunterschied verursacht. Es ist für die genaue Messung allerdings notwendig, daß die von der Temperatur abhängige Viskosität des Gemisches kompensiert wird.

Überraschend war auch, daß bei herstellungsbedingten Viskositätsunterschieden der Ausgangskomponente von z. B. 300 mPas durch den hohen Verdünnungseffekt der Endviskositätsunterschied nur noch bei lediglich 10 mPas liegt. Der Verlust eines Gewichtsteils Treibmittel zieht jedoch eine Viskositätsänderung von 40 mPas nach sich. Der gemessene Wert läßt sich über den Rechner auswerten und es läßt sich feststellen, ob der Sollgehalt an Treibmittel vorhanden ist.

Ist dies nicht der Fall, wird das Bedienungspersonal durch entsprechendes Verändern des Dosierverhältnisses von Reaktionskomponente und Treibmittel den Fehler ausgleichen.

Vorzugsweise ist das Viskosimeter über eine Impulsleitung mit einem Rechner verbunden, der andererseits über Impulsleitungen mit den Antrieben der Dosierpumpen für das Treibmittel und die damit zu vermischende Reaktionskomponente verbunden ist.

Auf diese Weise wird der Korrekturvorgang automatisiert.

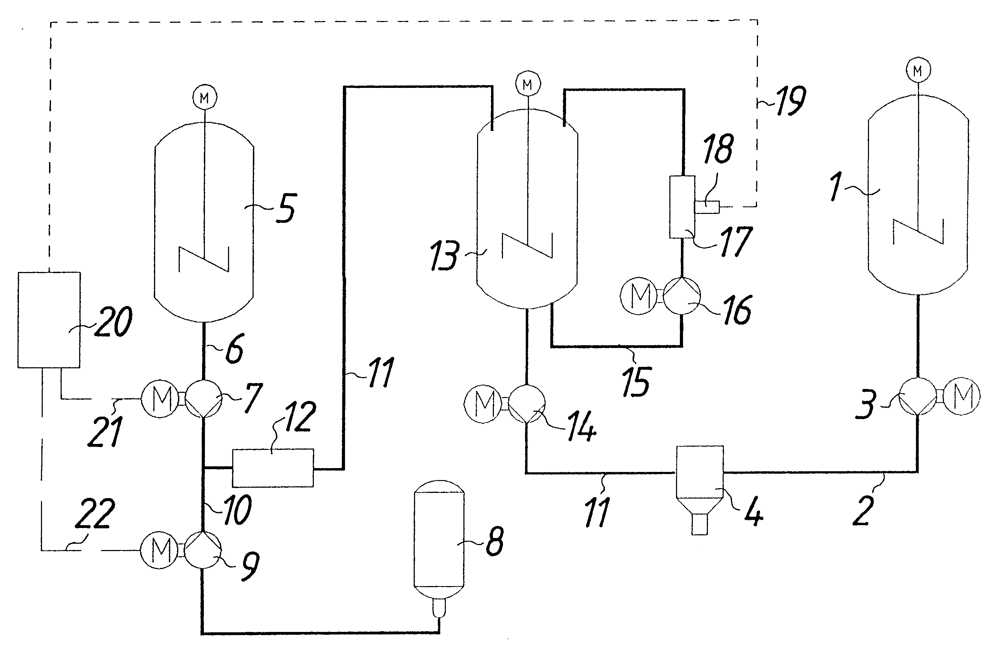

In der Zeichnung ist die neue Vorrichtung für die Herstellung eines Polyurethan-Reaktionsgemisches in einem Ausführungsbeispiel rein schematisch dargestellt und nachstehend näher erläutert:
Von einem Vorratsbehälter 1 für Isocyanat führt eine Zuleitung 2 über eine Dosierpumpe 3 zu einem Mischkopf 4. Von einem Vorratsbehälter 5 für Polyol führt eine weitere Zuleitung 6 mit einer Dosierpumpe 7 ab. Sie vereinigt sich mit einer von einem Treibmittel-Vorratsbehälter 8 über eine Dosierpumpe 9 abführenden Zuleitung 10 zu einer Zuleitung 11. In dieser sind ein statischer Vormischer 12, ein Zwischenbehälter 13 und eine Dosierpumpe 14 angeordnet, bevor sie in den Mischkopf 4 mündet. Diesem Zwischenbehälter 13 ist eine Kreislaufleitung 15 zugeordnet. In ihr sind eine konstant arbeitende Umwälzpumpe 16 und ein Viskosimeter 17 mit Temperatur-Kompensator 18 angeordnet. Vom Viskosimeter 17 führt eine Impulsleitung 19 zu einem Rechner 20. Dieser ist über eine Impulsleitung 21 mit der Dosierpumpe 7 und über eine Impulsleitung 22 mit der Dosierpumpe 9 verbunden.

Die Arbeitsweise der neuen Vorrichtung ist folgende:
Von den Dosierpumpen 3 und 7 werden von den Vorratsbehältern 1 und 5 Isocyanat bzw. Polyol im vorgewählten Verhältnis dosiert. Außerdem fördert die Dosierpumpe 9 ein niedrigsiedendes Treibmittel in gewünschter Menge. Im Vormischer 12 werden Polyol und Treibmittel miteinander vermischt und gelangen über die Zuleitung 11 in den Zwischenbehälter 13. Das darin enthaltene Gemisch wird über die Kreislaufleitung 15 mittels der Umwälzpumpe 16 im Kreislauf gefördert und dabei wird die Viskosität mittels des Viskosimeters 17 gemessen, wobei Temperatur-Unterschiede kompensiert werden, um einen vergleichbaren Wert zu erhalten. Der Wert wird in einen Rechner eingegeben und festgestellt, ob der Treibmittel-Gehalt dem Sollwert entspricht. Bei Abweichungen, in der Regel handelt es sich um einen zu niedrigen Treibmittel-Gehalt, werden über die Impulsleitungen 21 und/oder 22 eine oder beide Dosierpumpen 7 bzw. 9 hinsichtlich ihrer Dosiermenge verstellt, um das richtige Mischungsverhältnis wieder herzustellen. Der Meßvorgang erfolgt kontinuierlich, ebenso wie die erforderliche Nachregelung. Über die Dosierpumpe 14 gelangt das Gemisch aus Polyol und Treibmittel schließlich in den Mischkopf 4 und wird mit der Isocyanat-Komponente vermischt.

## Patentansprüche

1. Vorrichtung zum Herstellen eines Schaumstoff bildenden Reaktionsgemisches aus mindestens zwei Reaktionskomponenten und einem Treibmittel, bestehend aus Vorratsbehältern (1, 5, 8) für die Reaktionskomponenten und das Treibmittel, von denen Zuleitungen (2, 6, 10, 11) über Dosierpumpen (3, 7, 9, 14) zu einem Mischkopf (4) führen, wobei die Zuleitungen (6, 10) für eine der Reaktionskomponenten und für das Treibmittel sich hinter den zugehörigen Dosierpumpen (7, 9) vereinigen und wobei in dieser gemeinsamen Zuleitung (11) ein Vormischer (12) und ein Zwischenbehälter (13) angeordnet sind, dadurch gekennzeichnet, daß diesem Zwischenbehälter (13) eine Kreislaufleitung (15) zugeordnet ist und daß in dieser Kreislaufleitung (15) eine konstant arbeitende Umwälzpumpe (16) und ein mit einer Temperatur-Kompensation (18) versehenes Viskosimeter (17) angeordnet sind.

2. Vorrichtung nach Anspruch 1, dadurch gekennzeichnet, daß das Viskosimeter (17) über eine Impulsleitung (19) mit einem Rechner (20) verbunden ist, der andererseits über Impulsleitungen (21, 22) mit den Antrieben der Dosierpumpen (9, 7) für das Treibmittel und die damit zu vermischende Reaktionskomponente verbunden ist.
